(19)

Europäisches
Patentamt
European
Patent Office
Office européen
des brevets

(11) **EP 2 830 022 A2**

(12) **EUROPEAN PATENT APPLICATION**

(43) Date of publication:
**28.01.2015 Bulletin 2015/05**

(51) Int Cl.:
**G06T 19/00** *(2011.01)*  **G06T 7/00** *(2006.01)*
**G06K 9/00** *(2006.01)*

(21) Application number: **14175199.0**

(22) Date of filing: **01.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.07.2013  JP 2013153191**

(71) Applicant: **Fujitsu Ltd.**
**Kawasaki-shi, Kanagawa 211-8588 (JP)**

(72) Inventor: **Watanabe, Yuki**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **Information processing apparatus, and displaying method**

(57)    An information processing apparatus includes: a calculation unit configured to calculate, based on figure of a reference object recognized from an input image, positional information indicating a positional relationship between the reference object and an imaging position of the input image; and a determination unit configured to select, based on the positional information, at least one display data from among a plurality of pieces of display data associated with the reference object.

FIG. 10

EP 2 830 022 A2

# FIG. 14

**Description**

FIELD

A technique disclosed in embodiments relates to a technique for providing information for users.

BACKGROUND

There is a technique in which the model data of a three-dimensional object placed in three-dimensional virtual space corresponding to actual space is superimposed on a captured image captured by an imaging apparatus. This technique is called an augmented reality (AR) technique or the like because it augments information collected by perception (such as visual perception) of a person. The model data of a three-dimensional object placed in three-dimensional virtual space corresponding to actual space is called AR content.

AR content has a position in virtual space corresponding to actual space and, based on the position in virtual space, the projection image of AR content is superimposed on the captured image. The projection image of AR content is generated based on the positional relationship between the imaging apparatus and AR content.

A reference object present in actual space is used to decide the positional relationship between the imaging apparatus and AR content. For example, an AR marker is generally used as the reference object. That is, if an AR marker is detected in a captured image captured by the imaging apparatus, the positional relationship between the AR marker and the imaging apparatus is decided based on the picture of the AR marker in the captured image of the imaging apparatus. Then, since the positional relationship is reflected, the projection image of the AR content corresponding to the AR marker superimposed on the captured image (see Japanese National Publication of International Patent Application No. 2010-531089 and International Publication Pamphlet No. WO 2005-119539).

There is a known AR server that selects content to be provided for a terminal apparatus depending on where to issue a content transmission request based on the positional information of the terminal device that requests content for an AR server (see Japanese Laid-open Patent Publication No. 2012-215989). Positional information used by the terminal device includes positional information received by GPS receiver, positional information of a terminal device identified by a radio base station, and a user input such as an address, phone number, and zip code.

SUMMARY

TECHNICAL PROBLEM

The above AR server is able to transmit different content to terminal devices depending on whether AR marker X is recognized in prefecture A or prefecture B.

However, the AR server is not able to provide different content depending on the positional relationship between the user and AR marker X. For example, even if the content that is useful for the user changes depending on whether the user is present to the left or right of marker X, the AR server is not able to select content to be provided for the user.

The object of a disclosed technique according to the present embodiment is to perform information provision that depends on the positional relationship between the imaging position and the marker.

SOLUTION FOR THE PROBLEMS

According to an aspect of the invention, an information processing apparatus includes: a calculation unit configured to calculate, based on figure of a reference object recognized from an input image, positional information indicating a positional relationship between the reference object and an imaging position of the input image; and a determination unit configured to select, based on the positional information, at least one display data from among a plurality of pieces of display data associated with the reference object.

ADVANTAGES

According to an aspect of the present disclosure, it is possible to provide information depending on the environment in which the user is present.

BRIEF DESCRIPTION OF DRAWINGS

FIG. 1 depicts an example of a use scene according to the present embodiment;
FIG. 2 depicts a captured image captured by a user 111;
FIG. 3 depicts a display image provided for the user 111;
FIG. 4 depicts a captured image captured by a user 112;
FIG. 5 depicts a conventional display image when the positional relationship between marker M and the user 112 is not considered;
FIG. 6 depicts a display image provided for the user 112 in the present embodiment;
FIG. 7 depicts a captured image captured by a user 113;
FIG. 8 depicts a display image provided for the user 113 in the present embodiment;
FIG. 9 depicts the structure of a system;
FIG. 10 is a functional block diagram of an information processing apparatus 1 according to a first embodiment;
FIG. 11 depicts the relationship between a camera coordinate system and a marker coordinate system;
FIG. 12 depicts transformation matrix M from the marker coordinate system to the camera coordinate system and rotation matrix R in transformation matrix M;
FIG. 13 depicts rotation matrices R1, R2, and R3;
FIG. 14 is a diagram used to describe positional information;
FIG. 15 depicts an example of AR content C in the camera coordinate system and the marker coordinate system;
FIGs. 16A and 16B depict examples of the structure of a correspondence information table;
FIG. 17 depicts an example of the data structure of an AR content information table;
FIG. 18 depicts an example of the data structure of a template information table;
FIG. 19 is a functional block diagram of a management apparatus according to the first embodiment;
FIG. 20 is a flowchart illustrating an information provision method according to the first embodiment;
FIG. 21 is a functional block diagram of an information processing apparatus according to a second embodiment;
FIG. 22 is a functional block diagram of a management apparatus 4 according to the second embodiment;
FIG. 23 depicts flowcharts of an information provision method according to the second embodiment;
FIG. 24 depicts an example of the hardware structure of an information processing apparatus according to the embodiments;
FIG. 25 depicts an example of the structure of a program that operates in a computer 300; and
FIG. 26 depicts an example of the hardware structure of an management apparatus according to the embodiments.

DESCRIPTION OF EMBODIMENTS

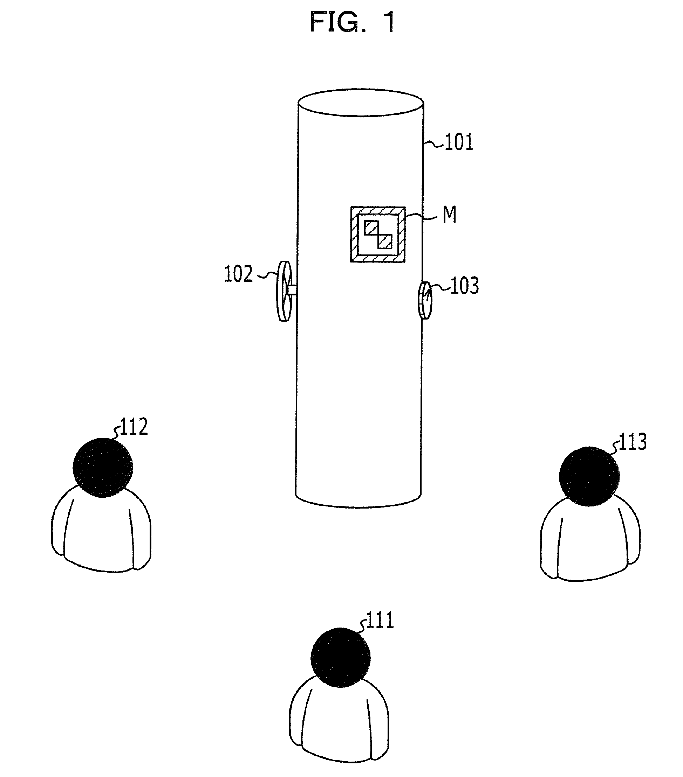

Embodiments according to the present disclosure will be described in detail below. The following embodiments may be combined with each other as appropriate unless inconsistency arises between their processes. The embodiments will be described below with reference to the drawings.
The following describes one use scene to which the present embodiment is applicable. FIG. 1 depicts an example of a use scene according to the present embodiment. FIG. 1 is a drawing illustrating actual space. For example, there is a cylindrical pipe 101 to which marker M is attached. Marker M is an example of a reference object used to decide the positional relationship between the imaging apparatus and AR content. The reference object is only desired to be recognizable as a reference based on its shape. A valve 102 and a sensor 103 are provided on the pipe 101.
In FIG. 1, users who are present in different positions are assumed to be a user 111, a user 112, and a user 113. The user 111, the user 112, and the user 113 may be different persons or the same person present at different times. The user 111, the user 112, and the user 113 have an information processing apparatus including an imaging apparatus and capture marker M at the corresponding positions.
The information processing apparatus recognizes marker M from an image captured by the imaging apparatus, as described below. Then, the information processing apparatus generates a display image in which the AR content corresponding to marker M is superimposed on this image, and displays the display image on the display. The user 111, the user 112, and the user 113 are able to grasp details of AR content by referencing the display images corresponding to the individual captured images.
Information provided for the users through AR content supplements, augments, and add information present in actual space. For example, information provided through AR content includes job details, descriptions, reminders, and so on to be applied to an object present in actual space.
For example, the user 111 captures marker M in a position substantially in front of marker M with an imaging apparatus. The imaging apparatus is included in the information processing apparatus held by the user 111. The information processing apparatus is a smart phone or tablet PC as described later.

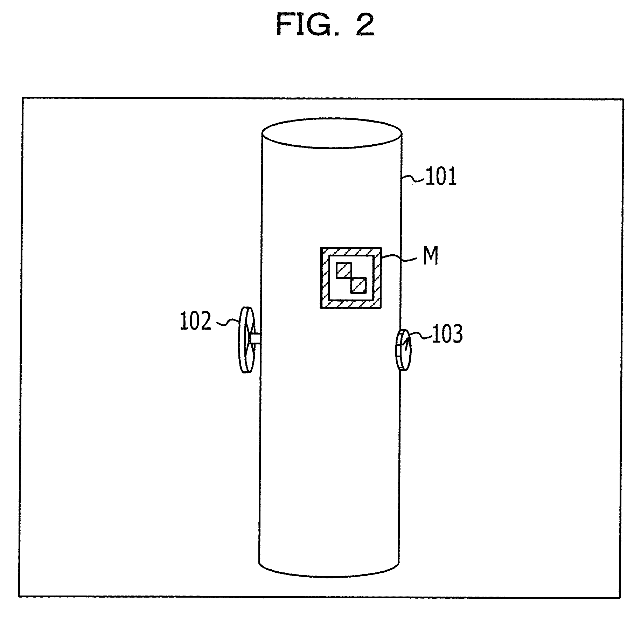

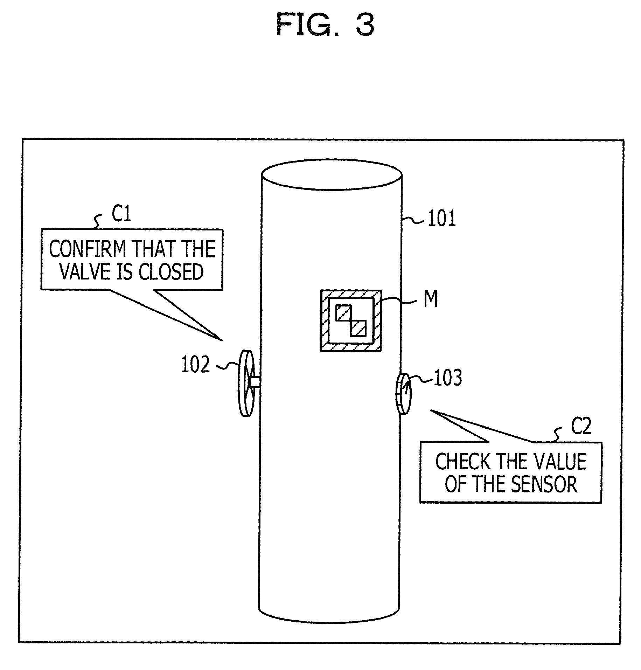

FIG. 2 depicts a captured image captured by the user 111. FIG. 3 depicts a display image provided for the user 111. In the display image depicted in FIG. 3, AR content is superimposed on the captured image in FIG. 2.
For example, as depicted in FIG. 2, the captured image includes the pipe 101, the valve 102, and the sensor 103. On the other hand, as depicted in FIG. 3, a display image created by a process described later further includes AR content. When marker M is associated with AR content C1 and AR content C2 in advance, a display image as depicted in FIG. 3 is generated. That is, as depicted in FIG. 3, the display image includes AR content C1 and AR content C2 in addition to the pipe 101, marker M, the valve 102, and the sensor 103.

As for AR content C1 and AR content C2, text data such as "Confirm that the valve is closed" in a balloon shape is defined as model data in three-dimensional space. In addition, for AR content C1 and AR content C2, placement such as position and rotation with respect to marker M is specified in advance.

For example, a creator who creates AR content creates, in advance, balloon-shaped model data in which "Confirm that the valve is closed" is displayed so that AR content C1 is displayed in a position of the valve 102 present in actual space.

Accordingly, when the information processing apparatus recognizes marker M, AR content C1 is displayed on the captured image according to the positional relationship between the user 111 and marker M and the placement information specified in advance. Details will be described later. When the user 111 captures marker M after AR content C1 is created, AR content C1 "Confirm that the valve is closed" is displayed. Accordingly, the user 111 is able to check the valve 102 present in actual space with reference to AR content C1. This is the same as in AR content C2.

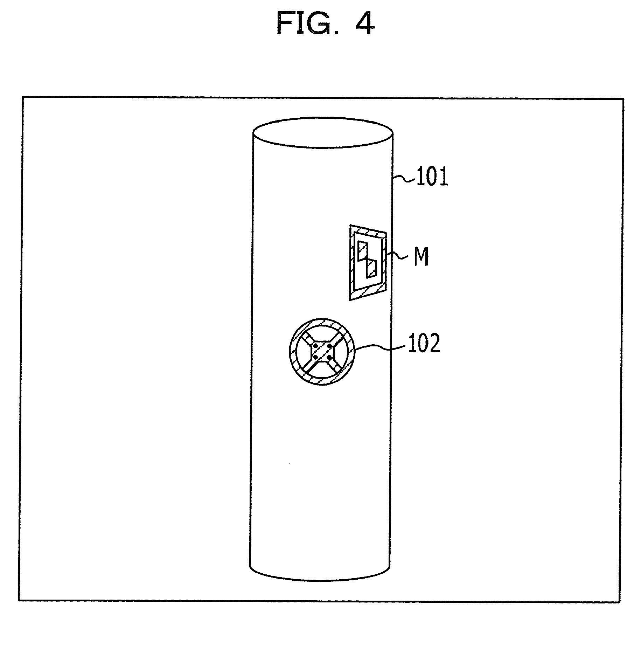

Next, the case of the user 112 depicted in FIG. 1 will be described. Since the user 112 is present to the left of marker M, the imaging apparatus of the information processing apparatus held by the user 112 captures marker M from the left. FIG. 4 depicts a captured image captured by the user 112. As depicted in FIG. 4, the captured image includes the pipe 101, marker M, and the valve 102. Note that the sensor 103 is not included in the captured image because of the position of the user 112.

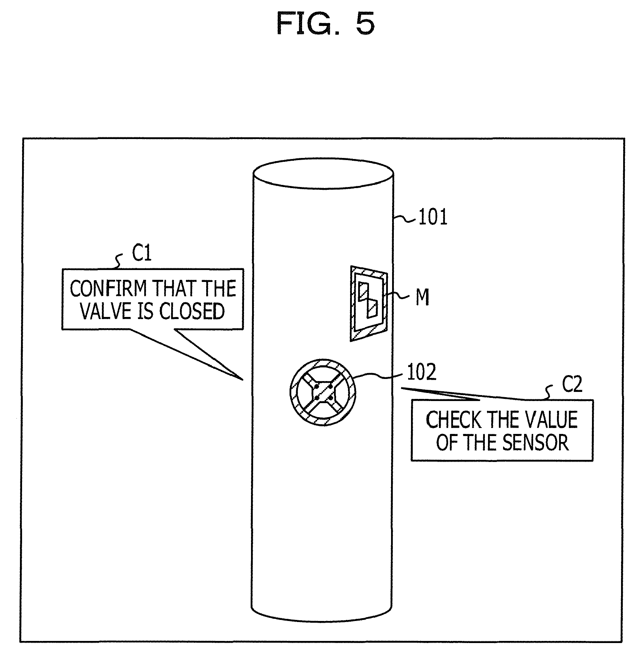

FIG. 5 depicts a conventional display image when the positional relationship between marker M and the user 112 is not considered. As in FIG. 3, AR content C1 and AR content C2 associated with marker M are uniquely displayed in the captured image. Since the positional relationship between marker M and the user 112 is different from that between marker M and the user 111, the display positions in the display image of AR content C1 and AR content C2 are different.

Since the sensor 103 is not visible to the user 112 in actual space, the user 112 is not able to grasp which sensor to check even when seeing AR content C2 "Check the value of the sensor". Since the sensor 103 is not visible, the user 112 may forget to carry out a job related to AR content C2. That is, the AR technique, which has the object of verifying information collected through the visual perception of the users by providing details of AR content for the users, is not fully utilized.

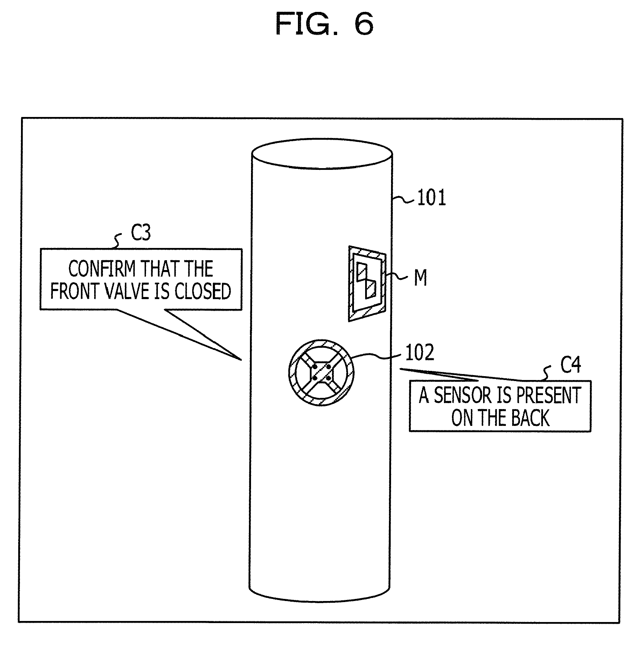

Accordingly, in the present embodiment, the appropriate AR content that depends on the positional relationship between marker M and the user 112 is provided for the user 112 in consideration of the positional relationship. FIG. 6 depicts a display image provided for the user 112 in the present embodiment. FIG. 6 includes the pipe 101, marker M, the valve 102, AR content C3, and the AR content C4 present in actual space. AR content C3 and the AR content C4 provide appropriate information in consideration of the environment (visual angle) of the user 112 based on the positional relationship between the user 112 and marker M.

For example, AR content C3 "Confirm that the front valve is closed" indicates a job for the valve 102, which is present in front of the user 112. AR content C4 "A sensor is present on the back" indicates the presence of the sensor 103 in the blind spot of the user 112. AR content C4 may promote the movement to a place where the sensor 103 is visible or may promote a check of the value of the sensor 103 on the back.

As described above, the information of AR content C1 and AR content C2 is appropriate for the environment (visual angle) of the user 111, while the information of AR content C3 and AR content C4 is appropriate for the environment (visual angle) of the user 112. Accordingly, the present embodiment appropriately selects AR content to be displayed, depending on the positional relationship between each user and marker M. Note that conditions related to the positional relationship and the AR content to be provided depending on each of the conditions is set by the creator in advance.

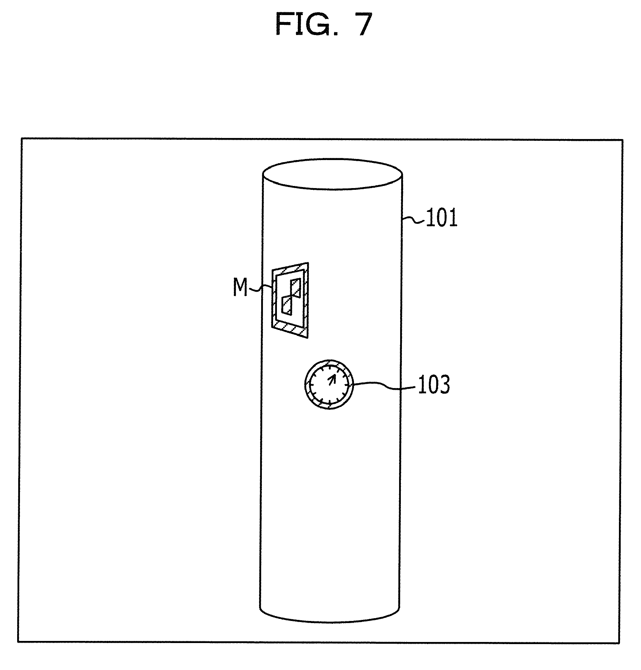

Next, the case of the user 113 depicted in FIG. 1 will be described. Since the user 113 is present to the right of marker M, the imaging apparatus of the information processing apparatus held by the user 113 captures marker M from the right. FIG. 7 is a captured image captured by the user 113. As depicted in FIG. 7, the captured image includes the pipe 101, marker M, and the sensor 103. Note that the valve 102 is not included in the captured image because of the position of the user 113.

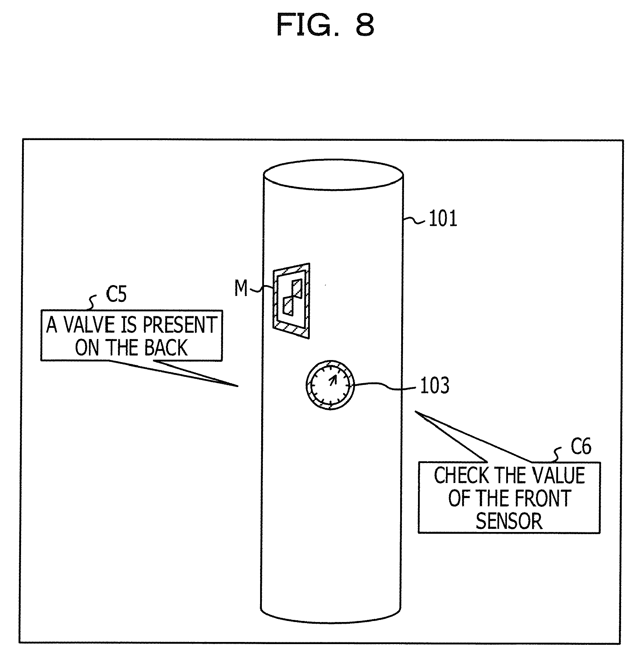

FIG. 8 depicts a display image provided for the user 113 in the present embodiment. FIG. 8 includes the pipe 101, marker M, the sensor 103, AR content C5, and the AR content C6 present in actual space. AR content C5 and the AR content C6 provide appropriate information that depends on the environment (visual angle) of the user 113 based on the positional relationship between the user 113 and marker M.

For example, AR content C5 "A valve is present on the back" indicates the presence of the valve 102 in the blind spot of the user 113. AR content C6 "Check the value of the front sensor" indicates a job for the sensor 103, which is present in front of the user 113. AR content C5 may promote the movement to a place where the valve 102 is visible or may promote a check of the open/close state of the valve 102 on the back.

As described above, one of the display images depicted in FIGs. 3, 6, and 8 depending on the positional relationship between each user and the marker. Note that the user position is an imaging position where the captured image is captured. AR content is an example of display information, which will be described later. The processing of embodiments will be described in detail below.

[First embodiment]

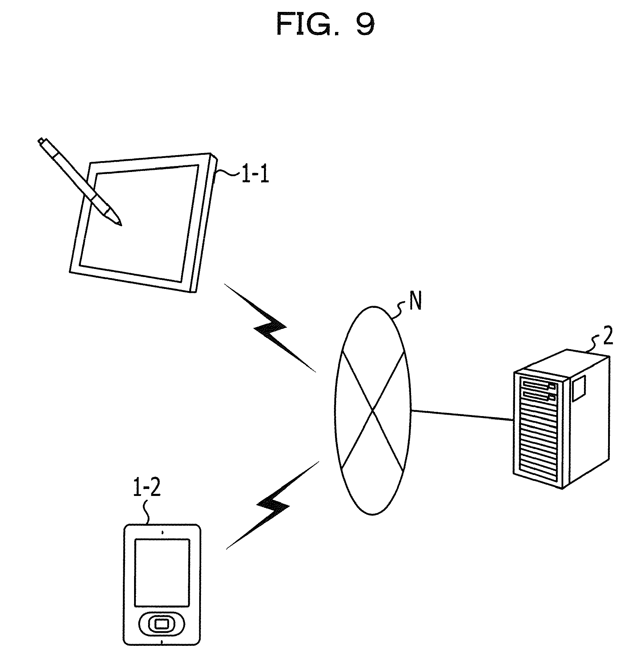

First, detailed processing and the structure of an information processing apparatus and so on according to a first embodiment will be described. FIG. 9 depicts the structure of a system. In the example in FIG. 9, a communication terminal 1-1 and a communication terminal 1-2 are indicated as the information processing apparatus. These information processing apparatuses are collectively indicated as an information processing apparatus 1. In addition, the information processing apparatus 1 communicates with a management apparatus 2 via network N. The information processing apparatus 1 is a computer such as a tablet PC or smart phone. The management apparatus 2 is, for example, a server computer and manages the information processing apparatus 1. Network N is the Internet, for example. The system according to the present embodiment includes an information processing apparatus 1 and a management apparatus 2.

The information processing apparatus 1 displays a display image that depends on the positional relationship between the user and the marker under control of the management apparatus 2. For example, the information processing apparatus 1 provides the AR content that depends on the positional relationship between the user and the marker. As a result, in the display image includes appropriate AR content that depends on the user environment.

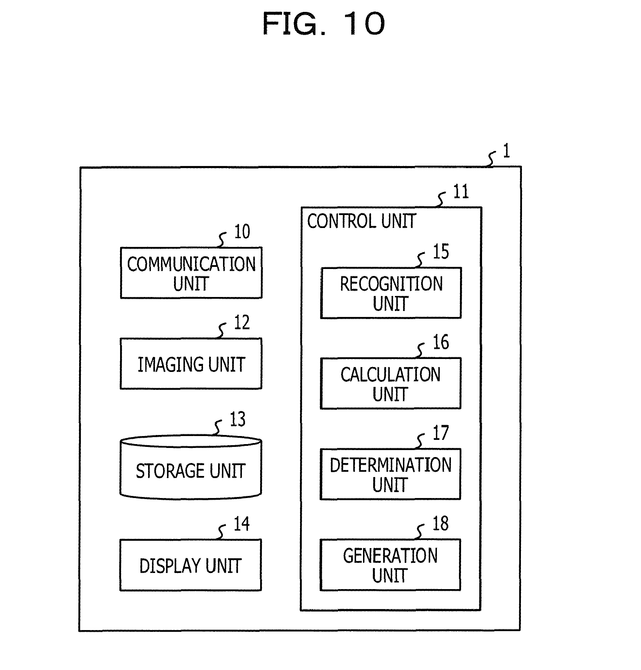

Next, the functional structure of the information processing apparatus 1 will be described. FIG. 10 is a functional block diagram of the information processing apparatus 1 according to the first embodiment. The information processing apparatus 1 includes a communication unit 10, a control unit 11, a storage unit 13, and a display unit 14. The information processing apparatus 1 may further include an imaging unit 12. Since the imaging unit 12 is an imaging apparatus, the use position is the position of the information processing apparatus 1.

If the information processing apparatus 1 does not have the imaging unit 12, the communication unit 10 may acquire a captured image from another imaging apparatus. In this case, however, the user position is the imaging position of the other imaging apparatus, not the position of the information processing apparatus 1.

The communication unit 10 communicates with another computer. For example, the communication unit 10 communicates with the management apparatus 2. Then, the communication unit 10 receives AR content information, template information, and correspondence information from the management apparatus 2. Although detailed information will be given later, AR content information is used to define AR content. Template information is used to draw the model data of AR content. Correspondence information associates a condition about the positional relationship between the imaging position and the marker with AR content provided under the condition.

The control unit 11 controls various types of processing executed by the information processing apparatus 1. For example, the control unit 11 receives a captured image captured by the imaging unit 12 as an input image and performs information provision that depends on the positional relationship between the imaging position and the marker. The control unit 11 includes a recognition unit 15, a calculation unit 16, a determination unit 17, and a generation unit 18.

The recognition unit 15 recognizes the reference object from the input image. That is, in the present embodiment, the recognition unit 15 recognizes the marker. The related-art method for recognizing an object is applied to the method for recognizing the marker. For example, the recognition unit 15 recognizes the marker by performing template matching using a template that defines the shape of the marker.

In addition, upon recognizing that the marker, that is, the reference object, is included in the imaging apparatus, the recognition unit acquires the marker ID. The marker ID is identification information that identifies the marker. The related-art method for acquiring the marker ID is applied to the method for acquiring the marker ID. For example, when the reference object is a marker, a unique marker ID is acquired from white/black arrangement as in a two-dimensional bar code.

The calculation unit 16 calculates positional information indicating the positional relationship between the reference object and the imaging position of the input image based on the picture of the reference object recognized by the recognition unit 15. For example, the calculation unit 16 calculates positional information based on the shape of the picture of the reference object (marker) in the input image.

The positional relationship in actual space between the imaging apparatus and the reference object is obtained based on the appearance (picture) of the reference object in a captured image. Since the shape, texture, and so on of the reference object is known, if the picture of the reference object is compared with a known shape or texture, the position of the reference object relative to the camera is decided.

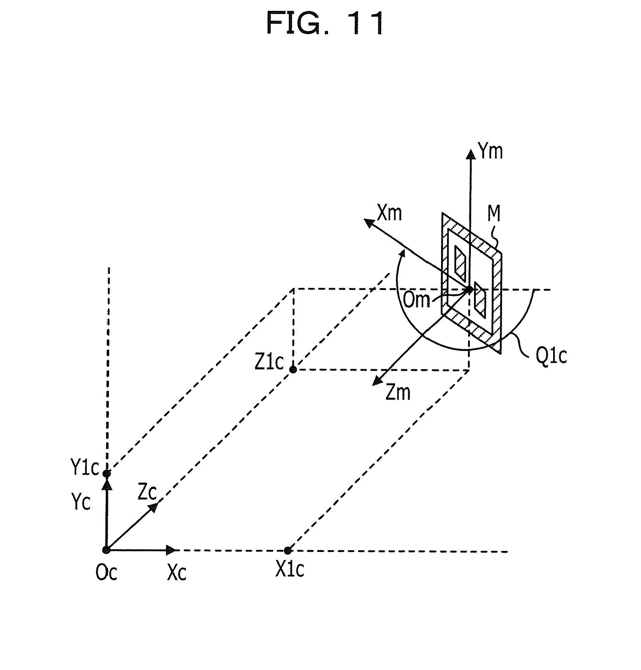

A method for calculating positional information will be described in detail below. First, a camera coordinate system and a marker coordinate system will be described. FIG. 11 depicts the relationship between the camera coordinate system and the marker coordinate system.

Marker M depicted in FIG. 11 is an example of a reference object used to display AR content. Marker M depicted in FIG. 11 is square and its size is determined in advance (with sides of 10 cm, for example). Although marker M depicted in FIG. 11 is square, another reference object with a shape may be used as long as the shape makes the position and orientation relative to the camera identifiable based on a picture captured even at any one of a plurality of viewpoints.

The camera coordinate system includes three-dimensional coordinates (Xc, Yc, Zc) and, takes, for example, the focus of the camera as its origin (origin Oc). In the present embodiment, the camera is an example of an imaging apparatus included in the information processing apparatus 1. For example, the Xc-Yc plane of the camera coordinate system is parallel to the image pickup device plane of the camera and the Zc axis (in the depth direction) is orthogonal to the image pickup device plane.

The marker coordinate system includes three-dimensional coordinates (Xm, Ym, Zm) and takes, for example, the center of marker M as its origin (origin Om). For example, the Xm-Ym plane of the marker coordinate system is parallel to the pattern print surface of the texture of marker M and the Zm axis is orthogonal to the print surface of marker M. Origin Om of the marker coordinate system is represented as V1c(X1c, Y1c, Z1c) in the camera coordinate system.

The rotation angle of the marker coordinate system relative to the camera coordinate system is represented as rotation coordinates G1c(P1c, Q1c, R1c). P1c represents the rotation angle about the Xc axis, Q1c represents the rotation angle about the Yc axis, and R1c represents the rotation angle about the Zc axis. Marker M depicted in FIG. 11 rotates only about the Ym axis, so P1c and R1c are 0 in this case.

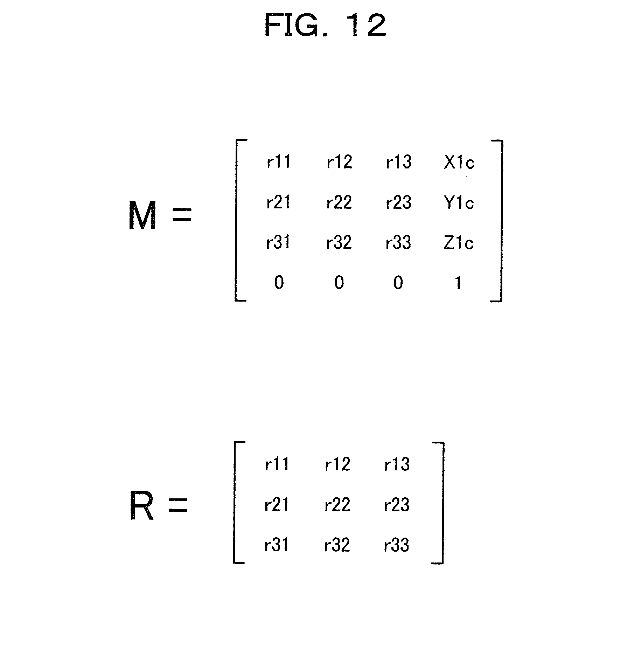

FIG. 12 depicts transformation matrix M from the marker coordinate system to the camera coordinate system and rotation matrix R in transformation matrix M. Transformation matrix M is a 4 x 4 matrix. Transformation matrix M is calculated based on positional coordinates V1c(X1c, Y1c, Z1c) and rotation coordinates G1c(P1c, Q1c, R1c) of the marker in the camera coordinate system.

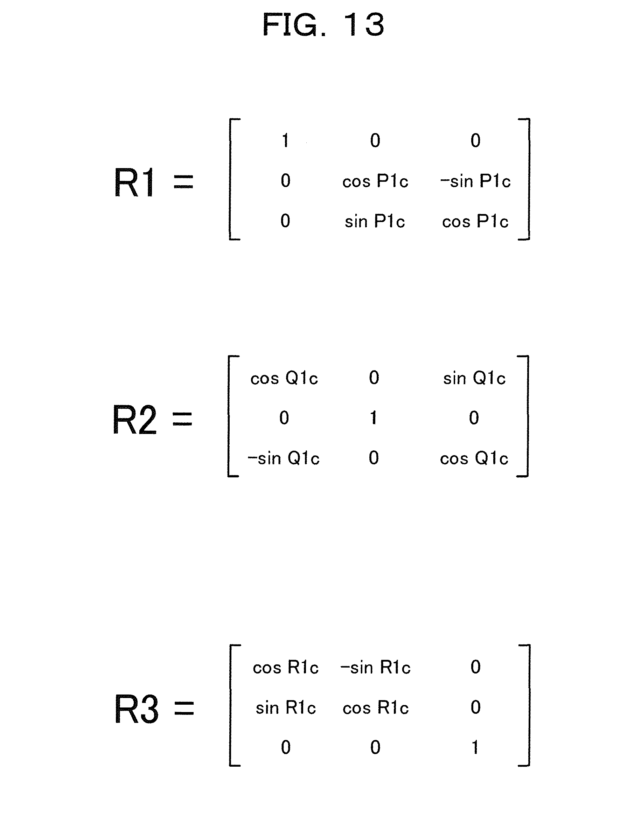

Rotation matrix R indicates how marker M (square shape) with a known shape is rotated to match marker M in an input image. Accordingly, rotation matrix R is obtained as the product of rotation matrices R1, R2, and R3 of the individual axes. Rotation matrices R1, R2, and R3 are depicted in FIG. 13. FIG. 13 depicts rotation matrices R1, R2, and R3.

Here, application of a partial matrix (rotation matrix R) including rows 1 to 3 and columns 1 to 3 of inverse matrix $M^{-1}$ of transformation matrix M to coordinates in the camera coordinate system executes rotation so that the orientation of the camera coordinate system matches that of the marker coordinate system. Application of a partial matrix including rows 1 to 3 and column 4 of inverse matrix $M^{-1}$ executes transitional operation that adjusts the orientation of the camera coordinate system and the position with respect to the marker coordinate system.

After generating a transformation matrix, the calculation unit 16 obtains column vector Am(Xm, Ym, Zm) as inverse matrix $M^{-1}$ of the product of transformation matrix M from the marker coordinate system to the camera coordinate system and column vector Ac(Xc, Yc, Zc, 1). Specifically, the calculation unit 16 obtains column vector Am(Xm, Ym, Zm, 1) using expression 1 below.

$$Am = M^{-1} \cdot Ac \qquad (1)$$

If the imaging position is assumed to substantially match the origin of the camera coordinate system, the imaging position is (0, 0, 0). Accordingly, if column vector (0, 0, 0, 1) is assigned to Ac, it is possible to determine what point in the marker coordinate system corresponds to the origin of the camera coordinate system from expression 1.

The point in the marker coordinate system that corresponds to the origin of the camera coordinate system is assumed to be U(Xu, Yu, Zu). Point U is a point determined by the 1 to 3 dimensional values of column vector Au(Xu, Yu, Zu, 1) obtained by expression 1.

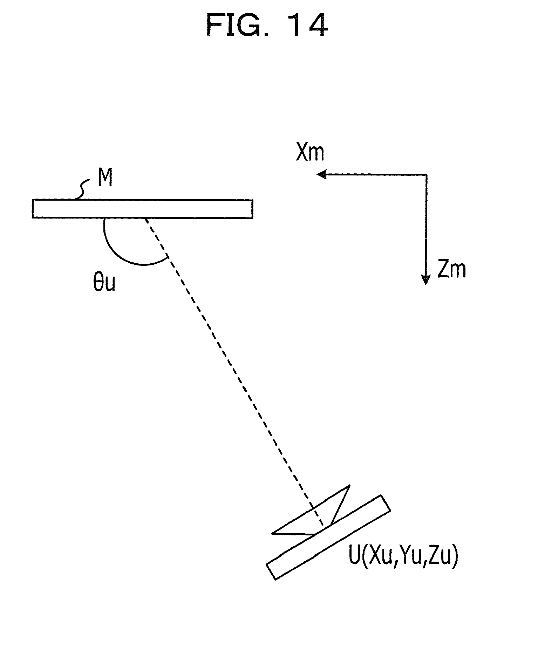

Next, the calculation unit 16 calculates positional information indicating a direction from the marker, based on point U. FIG. 14 is a diagram used to describe the positional information. As depicted in FIG. 14, in the present embodiment, the calculation unit 16 obtains direction θu of an imaging position relative to the Xm-Ym plane of the marker with respect to the X-axis of the marker coordinate system.

In the present embodiment, cosθu is obtained using expression 2 below and cosθu is used as positional information. Positional information θu may be obtained by converting cosθu. It is also possible to use U(Xu, Yu, Zu), which does not depend on direction θ.

$$\cos \theta u = \frac{Xu}{\sqrt{Yu^2 + Zu^2}} \qquad (2)$$

The positional information may be calculated by a method other than the above. For example, the calculation unit 16 generates positional information "The imaging position is to the right of the reference object" or positional information "The imaging position is to the left of the reference object" based on the picture of the reference object. For example, when a reference object that looks square from the front is used, if the left side is shorter by a certain ratio than the right side in the picture of the reference object in an input image, the calculation unit 16 generates "The imaging position is to the right of the reference object". That is, the calculation unit 16 calculates positional information indicating the position of the imaging position relative to the reference object by comparing the length of the left side with that of the right side based on the known shape of the reference object. The determination unit 17, which will be described later, switches and selects display information depending on the positional information.

Returning to FIG. 10, the determination unit 17 determines the display information depending on the positional information calculated by the calculation unit 16. For example, the determination unit 17 identifies the condition corresponding to the positional information with reference to correspondence information. Then, the determination unit 17 identifies the display information (AR content) corresponding to the condition in the correspondence information. The identified display information is provided for the user via, for example, the generation unit 18. Correspondence information will be described later.

The generation unit 18 generates a display image based on the display information and input image. For example, the generation unit 18 generates a display image in which the AR content identified by the determination unit 17 is superimposed on the input image based on AR content information and template information. AR content information and template information will be described later.

A method for generating a display image will be described. AR content is model data that includes a plurality of points. A texture or image is set for a plurality of planes obtained by interpolating a plurality of points with a line or curve and the plurality of planes are synthesized to form three-dimensional model data.

In the placement of AR content, the coordinates of points included in AR content are defined with respect to the reference object that is present in actual space. On the other hand, as described above, the positional relationship in actual space between the camera and the reference object is obtained based on the appearance (picture) of the reference object in a captured image captured by the camera.

Accordingly, the positional relationship between the camera and the coordinates of the points in the AR content may be obtained based on the coordinates with respect to the reference objet and the positional relationship between the camera and the reference object. Then, based on the positional relationship between the camera and the coordinates of the points in the AR content, the picture (projection image) of the AR content obtained if the AR content that is present in virtual space is captured is generated. The camera coordinate system and the marker coordinate system are as described above.

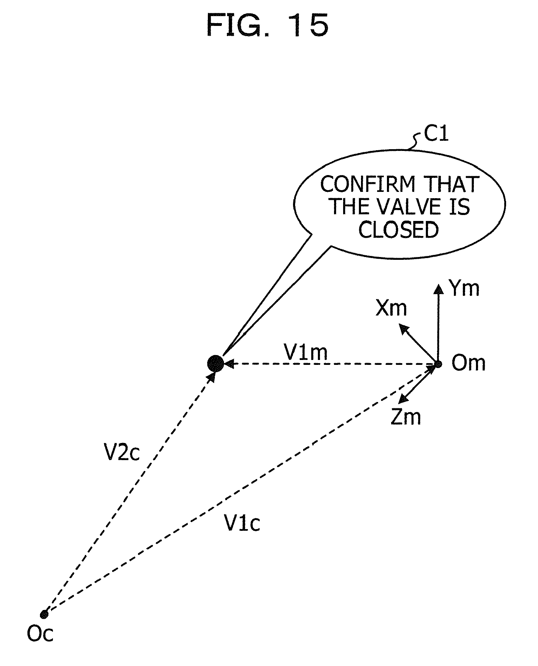

FIG. 15 depicts an example of AR content in the camera coordinate system and the marker coordinate system. AR content C1 depicted in FIG. 15 is balloon-shaped model data and contains text data "Confirm that the valve is closed" in the speech balloon. The black point at the apex of the black the speech balloon of AR content C1 is assumed to be the reference point of AR content C1. The coordinates in the marker coordinate system of the reference point of AR content C1 are assumed to be $V1m(X1m, Y1m, Z1m)$. In addition, the orientation of AR content C1 is determined by rotation coordinates $G1m(P1m, Q1m, Rim)$ and the size of AR content C1 is determined by magnification $D1m(J1x, J1y, J1z)$.

The coordinates of points included in AR content C1 are obtained by adjusting the coordinates of points defined in a prototype (AR template) the AR content C1 based on the reference point coordinates $V1m$, rotation coordinates $G1m$, and magnification Dim.

The coordinates of the reference point defined in an AR template are $(0, 0, 0)$, for example. The coordinates of points included in an AR template are adjusted through rotation based on the set rotation coordinates $G1m$, enlargement or reduction based on magnification Dim, and a parallel shift based on reference point coordinates Vim. AR content C1 in FIG. 3 is obtained by configuring the points included in the AR template based on the points adjusted based on the reference point coordinates $V1m$, rotation coordinates $G1m$, and magnification Dim in the marker coordinate system of marker M.

For AR content C1, information about the placement of the coordinates of the reference point in the marker coordinate system and rotation coordinates is set in advance based on AR content information described later. In addition, template information of a template to be applied to AR content C1 has information of the points included in the template.

Accordingly, the generation unit converts the coordinates in the marker coordinate system of the points in the AR content into the coordinates in the camera coordinate system using AR content information and template information. In addition, the coordinates in the camera coordinate system are converted into the positions in the display screen (coordinates in the screen coordinate system). The projection image of AR content C1 is generated based on the converted coordinates.

The coordinates in the camera coordinate system are calculated by performing coordination conversion (model-view conversion) that is based on coordinates $V1c$ and rotation coordinates $G1c$ for the coordinates in the marker coordinate system. For example, when model-view conversion is performed for coordinates $V1m$, coordinates $V2c$ ($X2c$,

Y2c, Z2c) in the camera coordinate system of the reference point are obtained.

Conversion from the marker coordinate system to the camera coordinate system is performed based on the determinants depicted in FIGs. 12 and 13. The generation unit 18 obtains column vector Ac (Xc, Yc, Zc, 1) by multiplying conversion matrix M from the marker coordinate system to the camera coordinate system by column vector Am (Xm, Ym, Zm, 1).

$$Ac = M \cdot Am \qquad\qquad (3)$$

Column vector Ac (Xc, Yc, Zc, 1), which includes point coordinates in the camera coordinate system, is obtained by assigning point coordinates in the marker coordinate system to be subject to coordinate conversion (model-view conversion) to column vector Am (Xm, Ym, Zm, 1) and performing matrix operation.

Application of partial matrix (rotation matrix R) including rows 1 to 3 and columns 1 to 3 of conversion matrix M depicted in FIG. 12 executes rotation so that the orientation of the marker coordinate system matches that of the camera coordinate system. Application of a partial matrix including rows 1 to 3 and column 4 of conversion matrix M executes transitional that matches the orientation of the marker coordinate system and the position with respect to the camera coordinate system.

As described above, coordinates (Xm, Ym, Zm) in the marker coordinate system of the points included in AR content C are converted into coordinates (Xc, Yc, Zc) in the camera coordinate system by model-view conversion that is based on conversion matrix M. Positional coordinates Vim depicted in FIG. 15 are converted into positional coordinates V2c by model-view conversion.

Next, transparent conversion for determining the project position of AR content in a display image will be described. Transparent conversion is coordinate conversion from the camera coordinate system to the screen coordinate system. The screen coordinate system includes two-dimensional coordinates (Xs, Ys) and takes, for example, the center of a captured image obtained by capturing with a camera as its origin (origin Os). The coordinates in the camera coordinate system of the points in AR content C are converted into the screen coordinate system through transparent conversion. The projection image of AR content C is generated based on the coordinates in the screen coordinate system obtained through transparent conversion.

Transparent conversion is performed based on focal length f of a camera, for example. The Xs coordinate of the coordinates in the screen coordinate system that correspond to coordinates (Xc, Yc, Zc) in the camera coordinate system is calculated by the expression 4 below. The Ys coordinate of the coordinates in the screen coordinate system that correspond to coordinates (Xc, Yc, Zc) in the camera coordinate system is calculated by expression 5 below.

$$Xs = f \cdot Xc/Zc \quad (4)$$

$$Ys = f \cdot Yc/Zc \quad (5)$$

The projection image of AR content C is generated based on the positional coordinates (in the screen coordinate system) obtained by the transparent conversion of the positional coordinates (in the camera coordinate system) of points included in AR content C. The template information of a template applied to AR content C defines the points interpolated to create a plane and the plane to which a texture (or image) is mapped. The projection image of AR content C is generated by mapping a texture or image to a plane obtained through interpolation of positional coordinates (in the screen coordinate system) according to the definition of the AR template.

The coordinates on a captured image that correspond to coordinates in the marker coordinate system are calculated by the above model-view conversion and transparent conversion and the projection image of AR content C that depends on the view point of a camera is generated using the coordinates. When the projection image of AR content C is synthesized with a captured image, the synthesized image appears on the screen as a three-dimensional image, providing extended visual information for the user.

Alternatively, as another example of AR content display, the projection image of AR content C may be displayed on a transparent display. Since the image in actual space that the user obtains through the display is harmonized with the projection image of AR content even in this aspect, extended visual image is provided for the user. Synthesized display of the projection image of AR content and a captured image in the present embodiment may be assumed as display of AR content when a transparent display is used.

Application of the above processing to the AR content corresponding to marker M generates a superimposed image in which the projection image of AR content is superimposed on a captured image in actual space. The generation unit 18 may use the conversion matrix generated by the calculation unit 16 as conversion matrix M.

Returning to the description of FIG. 10, the imaging unit 12 captures a image. Then, the imaging unit 12 inputs the captured image to the control unit 11. The imaging unit 12 captures an image at predetermined frame intervals.

The storage unit 13 stores various types of information under control of the control unit 11. The storage unit 13 stores correspondence information, AR content information, and template information. The display unit 14 displays an image such as a display image generated by the generation unit 18.

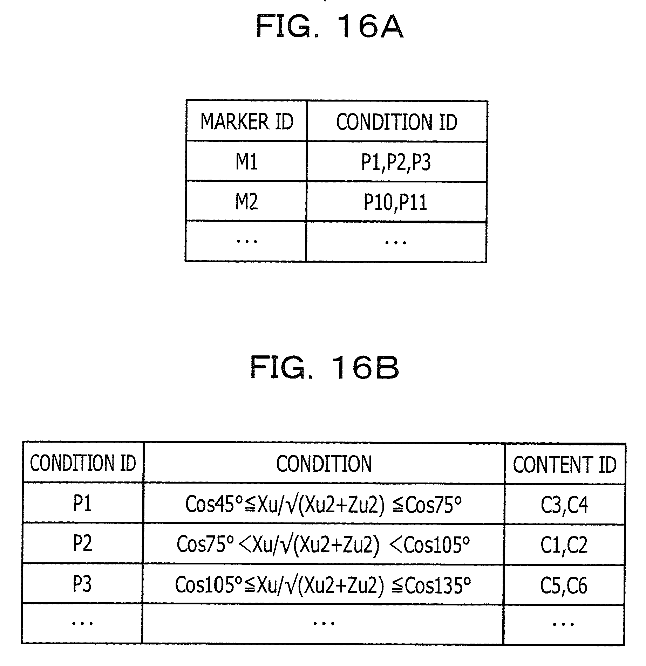

Various types of information will be described below. FIGs. 16A and 16B depict examples of the structure of a correspondence information table. The correspondence information table stores correspondence information. FIG. 16A depicts a first correspondence information table for managing the conditions corresponding to markers. FIG. 16B depicts a second correspondence information table for managing a condition about positional information and display information provided under the condition.

First, the first correspondence information table establishes correspondence between marker IDs and condition IDs and stores them. Condition IDs are identification information that identifies conditions. For example, FIG. 16A indicates that three condition IDs of P1, P2, and P3 are applied to a marker ID of M1.

Next, the second correspondence information table establishes correspondence between condition IDs, conditions, and content IDs and stores them. Content IDs are identification information that identifies AR content. For example, FIG. 16B indicates that the condition with a condition ID of P1 is applied when positional information $\cos\theta u$ is equal to or more than $\cos 45°$ and equal to or less than $\cos 75°$. The condition may be applied when $\theta u$ is equal to or more than $\cos 45°$ and equal to or less than $\cos 75°$.

The example in FIG. 16B also indicates that the AR content corresponding to a content ID of C3 and a content ID of C4 is provided if the positional information applies to the condition. For example, for the user 112 in FIG. 1, AR content C3 and AR content C4 are provided when $\theta u$ is 60°. The display image as depicted in FIG. 6 is provided for the user 112 when the determination unit 17 identifies the information to be provided with reference to the correspondence information table and then the generation unit 18 generates the display image.

In the example in FIG. 16B, no condition applies when the range from 0° to 45° and the range from 135° to 180°. This is because the range in which the shape of marker M is recognizable extends from 45° to 135°. If the recognizable range is wider, however, the range to be set as a condition becomes wider.

When using U(Xu, Yu, Zu) as positional information, the allowable range of values on each axis is defined as a condition. In addition, the distance from marker M, the height, and so on may be defined as conditions together with $\theta$. Although FIG. 16 indicates an example in which any AR content is provided for each condition, this is not restrictive. For example, AR content C1 and AR content C2 may be displayed under a certain condition while no AR content may be displayed in anther condition.

In another use example, it is assumed that a dangerous substance is present at a position distance D1 away from the marker in direction D2. At this time, if an area at the periphery of the position distance D1 away from the marker in direction D2 is defined as a condition and the positional information satisfies this condition, AR content "Heads up" may be provided as display information. On the other hand, an area other than the area at the periphery of the position is defined as another condition and the positional information satisfies the other condition, no AR content may be displayed.

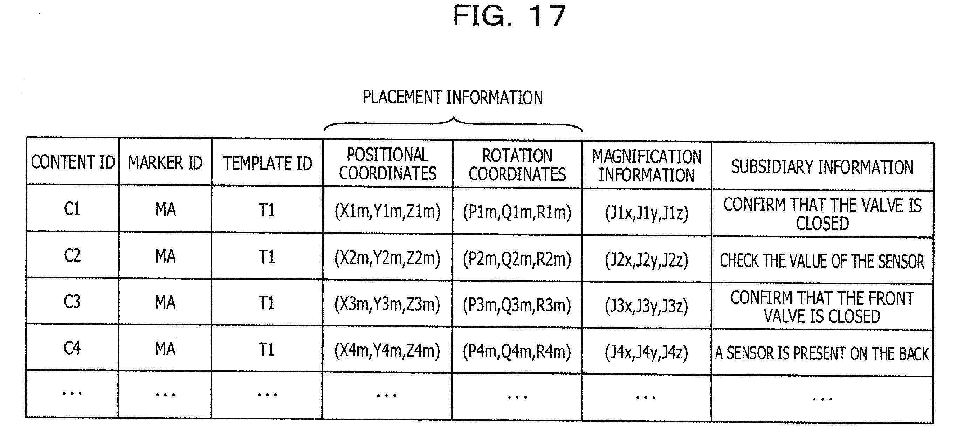

FIG. 17 depicts an example of the data structure of an AR content information table. The AR content information table stores AR content information. AR content information includes a content ID, marker ID, template ID, placement information, magnification information, subsidiary information, and so on about each piece of AR content.

A content ID is information that identifies each piece of AR content. A marker ID is information that identifies each AR marker. A template ID is information that identifies a template. In a template, the shape and texture of a three-dimensional model of AR content displayed in a display image are defined.

Placement information is information that relates to the placement position and rotation information of an AR content with respect to a reference object such as an AR marker. Specifically, placement information includes positional coordinates and rotation coordinates in the AR marker coordinate system. Magnification information is information for defining the magnification or reduction of a three-dimensional model that follows a template. Subsidiary information related to each piece of AR content. For example, subsidiary information is test information to be displayed in a three-dimensional model that follows a template.

In FIG. 17, for example, AR content with a content ID of C1 is associated with an AR marker with a marker ID of MA and represented by a three-dimensional model defined by a template ID of T1. The AR content with a content ID of C1 is placed on a captured image depending on the positional relationship between the camera and the AR marker based on positional coordinates (X1m, Y1m, Z1m), rotation coordinates (P1m, Q1m, R1m), and magnification (J1x, J1y, J1z) used as the reference. In addition, the AR content with a content ID of C1 places test information "Confirm that the valve is closed" in a three-dimensional model that follows a template ID of T1.

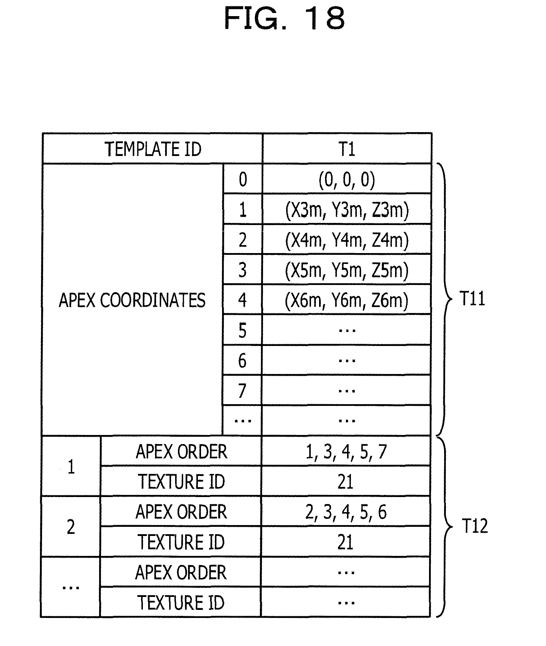

FIG. 18 depicts an example of the data structure of a template information table. The template information table stores template information. Template information includes the template IDs of AR templates, coordinate data T11 of the apexes of each AR template, and plane configuration data T12 of the planes of each AR template. Information of each plane included in plane configuration data includes a apex order indicating the order of apexes of the plane and the specification of a texture ID. A texture ID indicates identification information (identification information of an image file) of a texture to be mapped to a plane. The reference point of an AR template is the 0th apex, for example.

When the recognition unit 15 recognizes the AR marker corresponding to a marker ID of MA in a captured image acquired from the imaging unit 12, the calculation unit 16 calculates positional information. If the positional information is cos 60°, AR content C3 and AR content C4 are identified as the display information to be provided, based on correspondence information. Then, the generation unit 18 generates a display image (see FIG. 6) including AR content C3 and AR content C4 using the AR content information in FIG. 17 and the template information in FIG. 18. That is, the projection image of AR content that depends on the positional relationship between the imaging position and the marker is placed on the captured image.

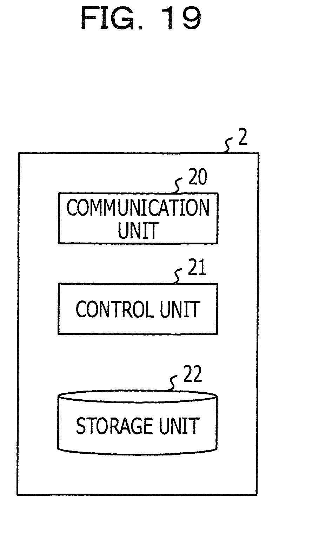

Next, the functional structure of the management apparatus 2 in FIG. 9 will be described. FIG. 19 is a functional block diagram of the management apparatus 2 according to the first embodiment. The management apparatus 2 includes a communication unit 20, a control unit 21, and a storage unit 22. The communication unit 20 communicates with another apparatus. For example, the communication unit 20 communicates with the information processing apparatus 1 and transmits AR content information, template information, and correspondence information.

The control unit 21 controls various types of processing executed by the management apparatus 2. For example, upon receiving a request for various types of information from the information processing apparatus 1, the control unit 21 reads information from the storage unit 22, controls the communication unit 20, and transmits the information to the information processing apparatus 1. In the present embodiment, upon the first reception of a request from the information processing apparatus 1, AR content information, template information, and correspondence information are transmitted to the information processing apparatus 1. This is because inspection using AR is enabled even if there is a place in a facility that communication radio waves do not reach when a user having information processing apparatus 1 performs inspection in the facility.

For example, the control unit 21 may determine the AR content information, template information, and correspondence information to be transmitted, depending on the place where the information processing apparatus 1 is present or the user who operates the information processing apparatus 1. For example, the control unit 21 extracts AR content information, template information, and correspondence information about markers surrounding the place where the information processing apparatus 1 is present from the storage unit 22 with reference to management information that associates the place where each marker is disposed with the marker ID of the marker.

The management apparatus 2 may provide, for the information processing apparatus 1, various types of information about the marker related to a scenario selected by the information processing apparatus 1 by preparing scenario information describing the job procedure of each job in advance. The scenario information includes the place related to the job and the marker ID of the marker disposed in that place.

The storage unit 22 stores AR content information, template information, and correspondence information. In addition, the storage unit 22 may store management information about the installation position of each marker and scenario information about a scenario, if desired. A part or all of the AR content information, template information, and correspondence information stored in the storage unit 22 is stored in the storage unit 13 of the information processing apparatus 1 according to a request from the information processing apparatus 1.

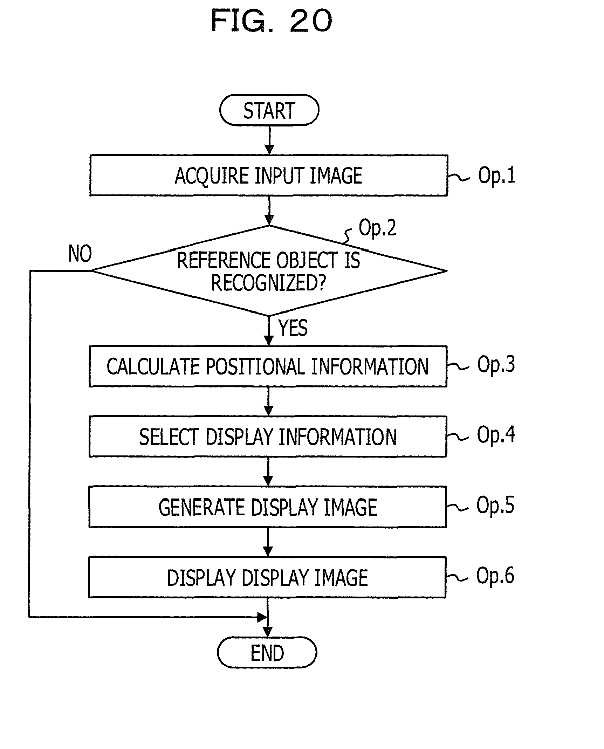

Next, a processing flow of an information provision method according to the present embodiment will be described. FIG. 20 is a flowchart illustrating the information provision method according to the first embodiment. Before performing the processing depicted in the flowchart, it is assumed that the information processing apparatus 1 acquires AR content information, template information, and correspondence information from the management apparatus 2 and stores them in the storage unit 13.

First, the recognition unit 15 acquires, as an input image, a captured image captured by the imaging unit 12 (operation 1). Then, the recognition unit 15 decides whether a reference object (marker) is recognized from the input image (operation 2). For example, a decision is made as to whether the object that matches a reference template is included in the input image. If no reference object is recognized (No in operation 2), the information processing apparatus 1 ends the information provision processing.

In contrast, if the reference object is recognized (Yes in operation 2), the recognition unit 15 further acquires the identification information of the reference object and outputs the recognition result and the identification information of the reference object to the calculation unit 16. For example, the recognition unit 15 outputs the recognition result indicating the recognition of a marker and its marker ID to the calculation unit 16. Next, the calculation unit 16 calculates positional information indicating the positional relationship between the reference object and the imaging position based the picture of a reference object in an input image (operation 3). The calculation method and so on described above are used as a method for calculating the positional information. Then, the calculation unit 16 outputs the positional information and marker ID to the determination unit 17.

The determination unit 17 selects display information based on the correspondence information, positional information, and marker ID (operation 4). For example, the determination unit 17 identifies the condition IDs applied to the marker ID from the first correspondence information and searches the identified condition IDs for the condition corresponding to the position indicated by the positional information. Then, the determination unit 17 identifies the AR content corresponding to the found condition. Then, the determination unit 17 outputs the identified display information to the generation unit 18.

The generation unit 18 generates a display image based on the AR content information, template information, and input image (operation 5). The generation method and so on described above are used to generate a display image. Then, the display unit 14 displays the display image (operation 6). Now, the information processing apparatus 1 ends the information provision processing.

As described above, the information processing apparatus 1 according to the present embodiment is able to perform information provision depending on the environment in which the user is present. That is, since information is provided for users based on the positional relationship between the reference object and the imaging position, information that depends on the environment is provided based on the reference object.


[Second embodiment]


In the first embodiment, the information processing apparatus selects the information to be provided. In the second embodiment, the management apparatus selects the information to be provided. For example, the management apparatus selects the AR content superimposed on a display image. Then, the management apparatus transmits AR content information and template information to the information processing apparatus. As described above, in the second embodiment, the information processing apparatus does not store AR content information, template information, and correspondence information in advance.

The system according to the second embodiment includes an information processing apparatus 3 and a management apparatus 4. The information processing apparatus 3 is a communication terminal held by the user as in the first embodiment. The management apparatus 4 is a server computer that manages the information processing apparatus 3 as in the first embodiment.

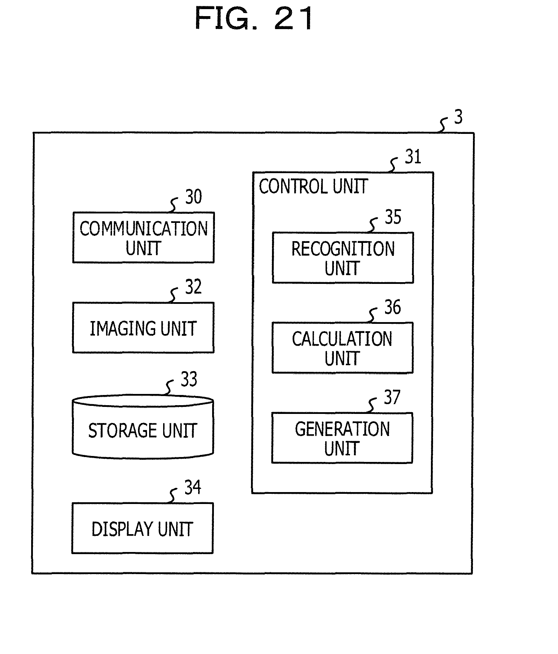

First, the functional structure of the information processing apparatus 3 according to the second embodiment will be described. FIG. 21 is a functional block diagram of the information processing apparatus 3 according to the second embodiment. The information processing apparatus 3 includes a communication unit 30, a control unit 31, an imaging unit 32, a storage unit 33, and a display unit 34.

The communication unit 30 communicates with the management apparatus 4. For example, the communication unit 30 transmits an information provision request to the management apparatus 4. The information provision request includes a marker ID recognized by a recognition unit 35 and positional information calculated by a calculation unit 36. The information provision request may further include a user ID, time information, and place information acquired by GPS or the like. A user ID, time information, and place information acquired by GPS or the like are used to identify the user.

After transmitting the information provision request, the communication unit 30 acquires display information from the management apparatus 4. Display information includes AR content information selected by the management apparatus 4 and its related template information.

The control unit 31 controls various types of processing executed by the information processing apparatus 3. The control unit 31 includes the recognition unit 35, the calculation unit 36, and a generation unit 37. The recognition unit 35 performs processing similar to that performed by the recognition unit 15 according to the first embodiment. The calculation unit 36 performs processing similar to that performed by the calculation unit 16 according to the first embodiment.

In addition, after calculating positional information, the calculation unit 36 according to the second embodiment generates the information provision request. Then, the calculation unit 36 controls the communication unit 30 and transmits the information provision request to the management apparatus 4. The generation unit 37 generates a display image based on the display information acquired from the management apparatus 4. Generation of a display image is the same as in the first embodiment.

The storage unit 33 stores various types of information. However, the storage unit 33 dose not acquire AR content information, template information, and correspondence information from the management apparatus 4 in advance. The storage unit 33 temporarily stores display information acquired from the management apparatus 4. The display unit 34 displays a display image as the display unit 14 according to the first embodiment.

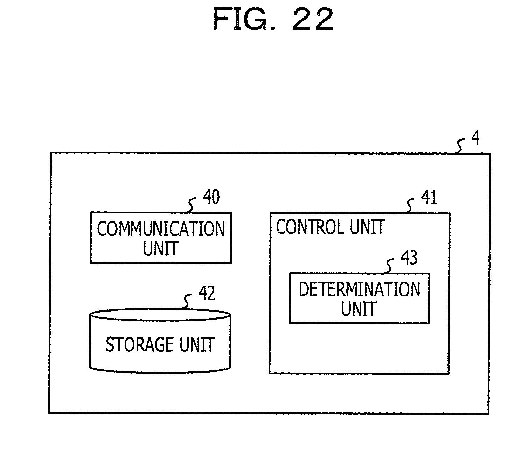

Next, the functional structure of the management apparatus 4 will be described. FIG. 22 is a functional block diagram of the management apparatus 4 according to the second embodiment. The management apparatus 4 includes a communication unit 40, a control unit 41, and a storage unit 42.

The communication unit 40 communicates with the information processing apparatus 3. For example, the communication unit 40 receives an information provision request from the information processing apparatus 3. In addition, the communication unit 40 transmits display information that depends on the positional information indicating the positional relationship between the user position and the marker to the information processing apparatus 3 under control of the control unit 41.

The control unit 41 controls various types of processing executed by the management apparatus 4. The control unit 41 includes a determination unit 43. The determination unit 43 identifies the information to be provided, based on the positional information and marker ID included in the information provision request.

For example, the determination unit 43 identifies the AR content that matches a condition with reference to correspondence information. In addition, the determination unit 43 reads the AR content information and template information related to the identified AR content from the storage unit 42. Then, the determination unit 43 transmits the read information to the information processing apparatus 3 by controlling the communication unit.

The storage unit 42 stores various types of information such as, for example, AR content information, template information, and correspondence information. The data structure of these types of information is the same as in the first embodiment.

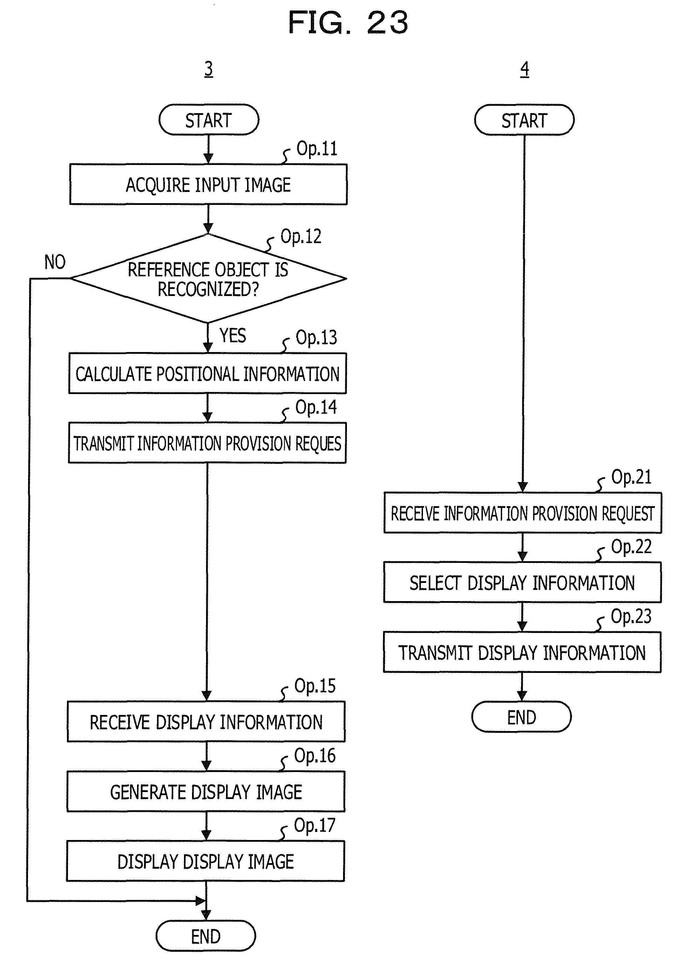

Next, processing flows of the information processing apparatus 3 and the management apparatus 4 will be described below. FIG. 23 depicts flowcharts of an information provision method according to the second embodiment.

First, the recognition unit 35 of the information processing apparatus 3 acquires an input image from the imaging unit 32 (operation 11). Next the recognition unit 35 decides whether a reference object is recognized from the input image (operation 12). For example, the recognition unit 35 decides whether an object that matches the template of the reference object is included in the input image. If the reference object is not recognized (No in operation 12), the information processing apparatus 3 ends the information provision processing.

On the other hand, if the reference object is recognized (Yes in operation 12), the recognition unit 35 outputs the recognition result and the identification information of the reference object to the calculation unit 36. Then, the calculation unit 36 calculates the positional information indicating the positional relationship between the reference object and the imaging position based on the image of the reference object in the input image (operation 13). The calculation unit 36 generates an information provision request including the positional information and marker ID. The communication unit 30 transmits the information provision request to the management apparatus 4 under control of the control unit 31 (operation 14).

On the other hand, the communication unit 40 of the management apparatus 4 receives the information provision request (operation 21). Then, the determination unit 43 selects display information based on the positional information and marker ID included in the information provision request (operation 22). Here, correspondence information is referenced, the AR content that matches the condition is selected, and the AR content information of the AR content and template information are selected. Next, the communication unit 40 transmits the display information including the AR content information and template information to the information processing apparatus 3 under control of the control unit 41 (operation 23).

Next, the communication unit 30 of the information processing apparatus 3 receives display information (operation 15). Then, the generation unit 37 generates a display image using the received display information and the input image acquired in operation 11 (operation 16). Then, the display unit 34 displays the display image (operation 17).

As described above, in the present embodiment, information provision that depends on the positional relationship between imaging position and a marker is performed. Since AR content information related to the AR content to be displayed and template information are transmitted from the management apparatus 4, the information processing apparatus 3 does not acquire the AR content information related to the AR content and template information in advance. Accordingly, storage areas may be reduced.

[Modification]

The second embodiment may be changed as described below. For example, the control unit 31 of the information processing apparatus 3 has only the generation unit 37. The control unit 41 of the management apparatus 4 may have functions equivalent to the recognition unit 35 and the calculation unit 36 of the information processing apparatus 3. Since the information processing apparatus 3 is only desired to generate a display image in this case, it is possible to reduce processing loads.

That is, the communication unit 30 of the information processing apparatus 3 transmits the input image to the management apparatus 4 as an information provision request. Then, the recognition unit 35 and the calculation unit 36 of the management unit 4 and the determination unit 43 select the display information that depends on the positional information between the imaging position and the marker. The communication unit 40 of the management apparatus 4 transmits the selected display information to the information processing apparatus 3. Then, the display unit 34 of the information processing apparatus 3 displays the display image based on the display information.

The control unit 41 of the management apparatus 4 may have functions equivalent to the recognition unit 35, the calculation unit 36, and the generation unit 37 of the information processing apparatus 3. Since the information processing apparatus 3 is only desired to generate a display image in this case, it is possible to reduce processing loads.

[Example of the hardware structure]

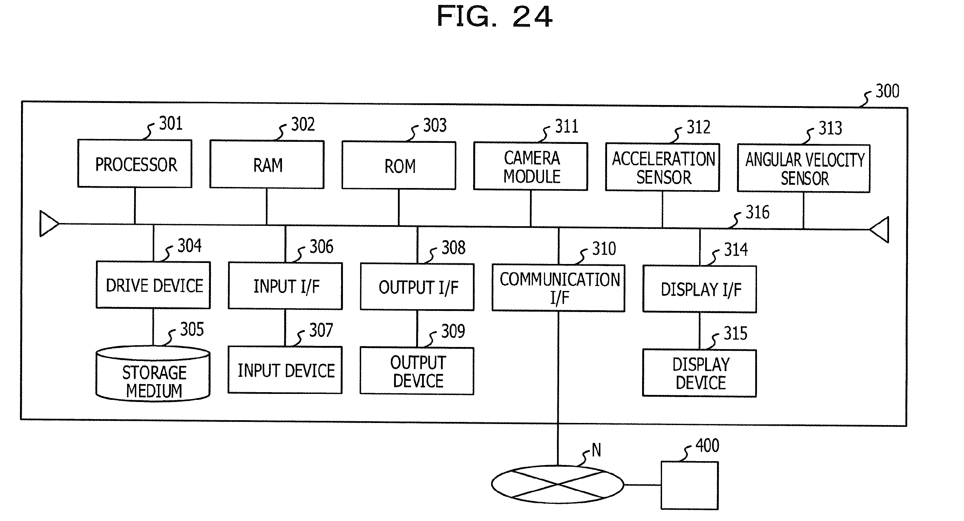

An example of the hardware structure information processing apparatuses and management apparatuses according to the embodiments will be described. First, the hardware structure of the information processing apparatus 1 according to the first embodiment and the information processing apparatus 3 according to the second embodiment will be described. The information processing apparatus as a modification is achieved using the computer 300 depicted in FIG. 24.

FIG. 24 depicts an example of the hardware structure of an information processing apparatus according to the embodiments. The information processing apparatuses according to the embodiments are achieved by a computer 300. The functional blocks depicted in FIGs. 10 and 21 are achieved by the hardware structure depicted in FIG. 24, for example. The computer 300 includes, for example, a processor 301, a random access memory (RAM) 302, a read only memory (ROM) 303, a drive device 304, a storage medium 305, an input interface (input I/F) 306, an input device 307, an output interface (output I/F) 308, an output device 309, a communication interface (communication I/F) 310, a camera module 311, an acceleration sensor 312, an angular velocity sensor 313, a display interface (display I/F) 314, a display device 315, a bus 316, and so on. These hardware components are interconnected via the bus 316.

The communication interface 310 controls communication via a network 3. The communication controlled by the communication interface 310 may access network N via a radio base station using radio communication. The input interface 306 is connected to an input device 307 and transfers an input signal received from the input device 307 to the processor 301. The output interface 308 is connected to the output device 309 and lets the output device 309 execute an output according to an instruction from the processor 301.

The input device 307 transmits an input signal according to an operation. The input device 307 is, for example, a key device such as a keyboard or buttons mounted on the body of the computer 300 or a pointing device such as a mouse or touch panel. The output device 309 outputs information according to control by the processor 301. The output device 309 is a voice output device such as a speaker.

The display interface 314 is connected to the display device 315. The display interface 314 lets the display device 315 display image information that the processor 301 written to a display buffer disposed in the display interface 314. The display device 315 outputs information according to control by the processor 301. An image output device such as a display or a transparent display is used as the display device 315.

When a transparent display is used, control may be made so that the projection image of AR content is displayed in, for example, an appropriate position in the transparent display, not synthesized with a captured image. This enables the user to acquire visual perception in which actual space and AR content is harmonized with each other. In addition, an input device such as a touch screen is used as the input device 307 and the display device 315. In place of incorporating the input device 307 and the display device 315 in a computer 1, it is also possible to externally connect the input device 307 and the display device 315 to the computer 300.

The RAM 302 is a readable/writable memory device and may be a semiconductor memory such as a static RAM (SRAM) or dynamic RAM (DRAM) or a non-RAM device such as a flash memory. The ROM 303 may be a programmable ROM (PROM).

The drive device 304 performs at least one of reading and writing of information stored in the storage medium 305. The storage medium 305 stores information written by the drive device 304. The storage medium 305 is at least one of storage media such as a hard disk, a solid state drive (SSD), a compact disc (CD), digital versatile disc (DVD), Blu-ray disc, and so on. In addition, for example, the computer 300 includes the drive device 304 that corresponds to the type of the storage medium 305 in the computer 300.

A camera module 311, which includes an image sensor, reads a value measured by the image sensor and writes the value to an image buffer for input images in the camera module 311, for example. The acceleration sensor 312 measures the acceleration applied to the acceleration sensor 312. The angular velocity sensor 313 measures the angular velocity of operation of the angular velocity sensor 313.

The processor 301 loads a program stored in the ROM 303 and the storage medium 305 to the RAM 302 and carries out processing according to the procedure in the loaded program. For example, the functions of the control unit 11 and the control unit 31 are achieved by causing the processor 301 to control another hardware component based on the information provision programs (which may be a part of an AR control program) depicted in FIGs. 20 and 23. The functions of the communication unit 10 and the communication unit 30 are achieved by causing the processor 301 to execute data communication by controlling the communication interface 310 and to store the received data in the storage medium 305.

The functions of the storage unit 13 and the storage unit 33 are achieved by causing the ROM 303 and the storage medium 305 to store program files and data files or using the RAM 302 as a work area of the processor 301. For example, AR content information, template information, correspondence information, and so on are stored in the RAM 302.

The functions of the imaging units 12 and 32 are achieved by causing the camera module 311 to write image data to the image buffer for input images and the processor 301 to read image data from the image buffer for input images. In the monitoring mode, image data is written to the image buffer for input images in parallel with a display buffer for the display device 315.

The functions of the display unit 14 and the display unit 34 are achieved by writing image data generated by the processor 301 to a display buffer included in the display interface 314 and causing the display device 315 to display the image data in the display buffer.

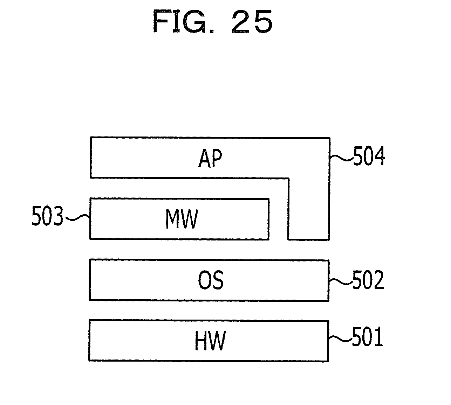

FIG. 25 depicts an example of the structure of a program that operates in the computer 300. An operating system (OS) 502 runs on the computer 300. When the processor 301 controls and manages hardware 501 following the procedure of the OS 502, processing by an application program (AP) 504 and middleware (MW) 503 is performed on the hardware 501.

In the computer 300, programs such as the OS 502, the MW 503, and AP 504 are loaded to, for example, the RAM 302 and then executed by the processor 301. The AR control program including the information provision programs according to the embodiments is, for example, a program called from the AP 504 as the MW 503. Alternatively, the AR control program including the information provision programs is a program that achieves the AR function as the AP 504. The AR control program is stored in the storage medium 305. The storage medium 305 that stores only the information provision program according to the present embodiment or the storage medium 305 that stores the AR control program including the information provision program may be distributed separately from the body of the computer 300.

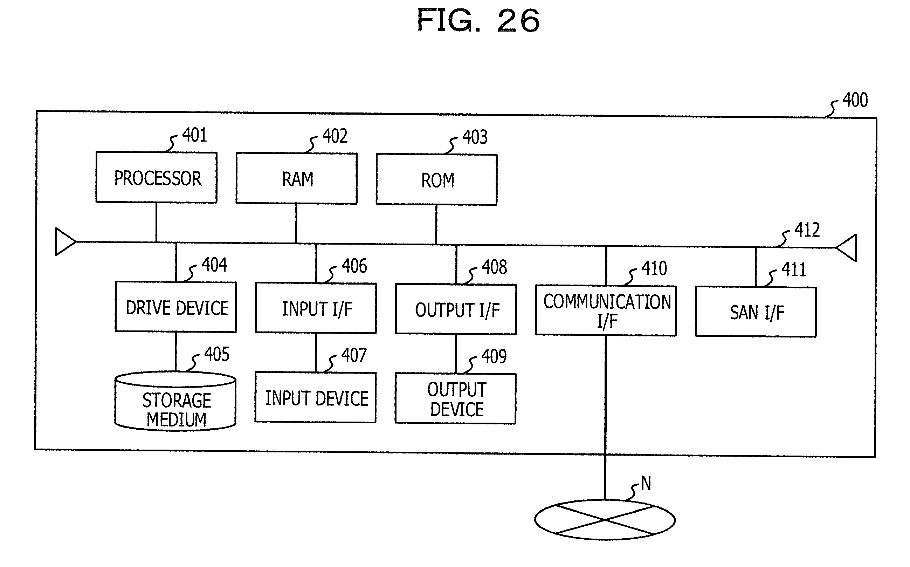

Next, the hardware structure of the management apparatus 2 according to the first embodiment and the management apparatus 4 according to the second embodiment will be described. FIG. 26 depicts an example of the hardware structure of an management apparatus according to the embodiments. The management apparatus 2 and the management apparatus 4 are achieved using a computer 400. In addition, the management apparatus indicated as a modification may also be achieved using the computer 400 depicted in FIG. 26.

The functional blocks depicted in FIGs. 19 and 22 are achieved by the hardware structure depicted in FIG. 26, for example. The computer 400 includes, for example, a processor 401, a random access memory (RAM) 402, a read only memory (ROM) 403, a drive device 404, a storage medium 405, an input interface (input I/F) 406, an input device 407, an output interface (output I/F) 408, an output device 409, a communication interface (communication I/F) 410, a storage area network (SAN) interface (SAN I/F), a bus 412, and so on. These hardware components are interconnected via the bus 412.

For example, the processor 401 is hardware that is the same as the processor 301. The RAM 402 is hardware that is the same as the RAM 302, for example. The ROM 403 is hardware that is the same as the ROM 303, for example. The drive device 404 is hardware that is the same as the drive device 304, for example. The storage medium 405 is hardware that is the same as the storage medium 305, for example. The input interface (input I/F) 406 is hardware that is the same as the input interface 306, for example. The input device 407 is hardware that is the same as the input device 307, for example.

The output interface (output I/F) 408 is hardware that is the same as the output interface 308, for example. The output device 409 is hardware that is the same as the output device 309, for example. The communication interface (communication I/F) 410 is hardware that is the same as the communication interface 310, for example. The storage area network (SAN) interface (SAN I/F), which is an interface for connecting the computer 400 to a SAN, includes a host bus adapter (HBA).

The processor 401 loads a program stored in the ROM 403 and the storage medium 405 to the RAM 402 and carries out processing of the control unit 21 and the control unit 41 according to the procedure in the loaded program. At this time, the RAM 402 is used as a work area of the processor 401. The management program includes an information provision program related to information provision processing in the management apparatus 2 and the management apparatus 4.

The functions of the storage unit 22 and the storage unit 42 are achieved by causing the ROM 403 and the storage medium 405 to store program files and data files or using the RAM 402 as a work area of the processor 401. The functions of the communication unit 20 and the communication unit 40 are achieved by causing the processor 401 to perform communication processing by controlling the communication interface 410.

REFERENCE SIGNS LIST

1, 3        Information processing apparatus
10, 30      Communication unit
11, 31      Control unit

| 12, 32 | Imaging unit |
| 13, 33 | Storage unit |
| 14, 34 | Display unit |
| 2, 4 | Management apparatus |
| 20, 40 | Communication unit |
| 21, 41 | Control unit |
| 22, 42 | Storage unit |

**Claims**

1. An information processing apparatus comprising:

   a calculation unit configured to calculate, based on figure of a reference object recognized from an input image, positional information indicating a positional relationship between the reference object and an imaging position of the input image; and
   a determination unit configured to select, based on the positional information, at least one display data from among a plurality of pieces of display data associated with the reference object.

2. The information processing apparatus according to claim 1, wherein
   the reference object has a known shape and
   the calculation unit calculates the positional information based on a comparison between the figure and the known shape.

3. The information processing apparatus according to one of claims 1 and 2, further comprising:

   a storage unit configured to store correspondence information that associates each of the plurality of pieces of display data with each of conditions regarding the positional information,
   wherein the determination unit selects the at least one display data based on the correspondence information and the positional information.

4. The information processing apparatus according to claim 3, wherein the each of conditions is defined as an area of position and
   the determination unit identifies a certain condition in which the positional information is included, and selects the at least one display data corresponding to the certain condition.

5. The information processing apparatus according to claim 4, wherein the area is set radially with respect to the reference object.

6. The information processing apparatus according to claim 4, wherein the area is indicated by a distance and a direction from the reference object.

7. The information processing apparatus according to any one of claims 1 to 6, further comprising:

   a generation unit configured to generate image data for displaying the at least one display data, on the input image, at a certain position which is set in advance with respect to the reference object.

8. The information processing apparatus according to any one of claims 1 to 7, wherein
   the calculation unit calculates a three dimensional position, as the positional information, corresponding to the imaging position in three dimensional space with respect to the reference object.

9. A displaying method executed by a computer comprising:

   calculating, based on figure of a reference object recognized from an input image, positional information indicating a positional relationship between the reference object and an imaging position of the input image; and
   selecting, based on the positional information, at least one display data from among a plurality of pieces of display data associated with the reference object.

**10.** The displaying method according to claim 9, wherein positional information is calculated based on a comparison between the figure and a known shape of the reference object.

**11.** The displaying method according to one of claims 9 and 10, wherein the at least one display data is selected based on correspondence information and the positional information, the correspondence information associating each of the plurality of pieces of display data with each of conditions regarding the positional information.

**12.** The displaying method according to claim 11, wherein the each of conditions is defined as an area of position and the at least one display data is selected corresponding to a certain condition which includes the positional information.

**13.** The displaying method according to claim 12, wherein the area is set radially with respect to the reference object.

**14.** The displaying method according to any one of claims 9 to 13, further comprising:

generating image data for displaying the at least one display data, on the input image, at a certain position which is set in advance with respect to the reference object.

**15.** The displaying method according to any one of claims 9 to 14,
wherein the positional information is a three dimensional position corresponding to the imaging position in three dimensional space with respect to the reference object.

# FIG. 1

# FIG. 2

# FIG. 3

C1

CONFIRM THAT THE
VALVE IS CLOSED

~101

M

102~

~103

C2

CHECK THE VALUE
OF THE SENSOR

# FIG. 4

# FIG. 5

C1

CONFIRM THAT THE
VALVE IS CLOSED

101

M

102

C2

CHECK THE VALUE
OF THE SENSOR

# FIG. 6

C3
CONFIRM THAT THE
FRONT VALVE IS CLOSED

101

M

102

C4
A SENSOR IS PRESENT
ON THE BACK

# FIG. 7

# FIG. 8

C5

A VALVE IS PRESENT ON THE BACK

M

~101

103

C6

CHECK THE VALUE OF THE FRONT SENSOR

# FIG. 9

# FIG. 10

# FIG. 11

## FIG. 12

$$M = \begin{bmatrix} r11 & r12 & r13 & X1c \\ r21 & r22 & r23 & Y1c \\ r31 & r32 & r33 & Z1c \\ 0 & 0 & 0 & 1 \end{bmatrix}$$

$$R = \begin{bmatrix} r11 & r12 & r13 \\ r21 & r22 & r23 \\ r31 & r32 & r33 \end{bmatrix}$$

# FIG. 13

$$R1 = \begin{bmatrix} 1 & 0 & 0 \\ 0 & \cos P1c & -\sin P1c \\ 0 & \sin P1c & \cos P1c \end{bmatrix}$$

$$R2 = \begin{bmatrix} \cos Q1c & 0 & \sin Q1c \\ 0 & 1 & 0 \\ -\sin Q1c & 0 & \cos Q1c \end{bmatrix}$$

$$R3 = \begin{bmatrix} \cos R1c & -\sin R1c & 0 \\ \sin R1c & \cos R1c & 0 \\ 0 & 0 & 1 \end{bmatrix}$$

# FIG. 14

# FIG. 15

C1

CONFIRM THAT
THE VALVE IS
CLOSED

Ym

Xm

V1m

Om

Zm

V2c

V1c

Oc

# FIG. 16A

| MARKER ID | CONDITION ID |
|-----------|--------------|
| M1 | P1,P2,P3 |
| M2 | P10,P11 |
| . . . | . . . |

# FIG. 16B

| CONDITION ID | CONDITION | CONTENT ID |
|--------------|-----------|------------|
| P1 | $Cos45° \leqq Xu/\sqrt{(Xu2+Zu2)} \leqq Cos75°$ | C3,C4 |
| P2 | $Cos75° < Xu/\sqrt{(Xu2+Zu2)} < Cos105°$ | C1,C2 |
| P3 | $Cos105° \leqq Xu/\sqrt{(Xu2+Zu2)} \leqq Cos135°$ | C5,C6 |
| . . . | . . . | . . . |

# FIG. 17

PLACEMENT INFORMATION

| CONTENT ID | MARKER ID | TEMPLATE ID | POSITIONAL COORDINATES | ROTATION COORDINATES | MAGNIFICATION INFORMATION | SUBSIDIARY INFORMATION |
|---|---|---|---|---|---|---|
| C1 | MA | T1 | (X1m,Y1m,Z1m) | (P1m,Q1m,R1m) | (J1x,J1y,J1z) | CONFIRM THAT THE VALVE IS CLOSED |
| C2 | MA | T1 | (X2m,Y2m,Z2m) | (P2m,Q2m,R2m) | (J2x,J2y,J2z) | CHECK THE VALUE OF THE SENSOR |
| C3 | MA | T1 | (X3m,Y3m,Z3m) | (P3m,Q3m,R3m) | (J3x,J3y,J3z) | CONFIRM THAT THE FRONT VALVE IS CLOSED |
| C4 | MA | T1 | (X4m,Y4m,Z4m) | (P4m,Q4m,R4m) | (J4x,J4y,J4z) | A SENSOR IS PRESENT ON THE BACK |
| ... | ... | ... | ... | ... | ... | ... |

EP 2 830 022 A2

# FIG. 18

| TEMPLATE ID | | T1 | |
|---|---|---|---|
| APEX COORDINATES | 0 | (0, 0, 0) | T11 |
| | 1 | (X3m, Y3m, Z3m) | |
| | 2 | (X4m, Y4m, Z4m) | |
| | 3 | (X5m, Y5m, Z5m) | |
| | 4 | (X6m, Y6m, Z6m) | |
| | 5 | ... | |
| | 6 | ... | |
| | 7 | ... | |
| | ... | ... | |
| 1 | APEX ORDER | 1, 3, 4, 5, 7 | T12 |
| | TEXTURE ID | 21 | |
| 2 | APEX ORDER | 2, 3, 4, 5, 6 | |
| | TEXTURE ID | 21 | |
| ... | APEX ORDER | ... | |
| | TEXTURE ID | ... | |

# FIG. 19

2

20

COMMUNICATION
UNIT

21

CONTROL UNIT

22

STORAGE UNIT

# FIG. 20

```
          ┌─────────────┐
          │    START    │
          └─────────────┘
                 │
                 ▼
   ┌──────────────────────────────┐
   │      ACQUIRE INPUT IMAGE      │── Op.1
   └──────────────────────────────┘
                 │
                 ▼      Op.2
          ╱─────────────────╲
   NO    ╱  REFERENCE OBJECT IS ╲
  ◄─────<      RECOGNIZED?        >
         ╲                      ╱
          ╲────────────────────╱
                 │ YES
                 ▼
   ┌──────────────────────────────┐
   │  CALCULATE POSITIONAL INFORMATION │── Op.3
   └──────────────────────────────┘
                 │
                 ▼
   ┌──────────────────────────────┐
   │    SELECT DISPLAY INFORMATION │── Op.4
   └──────────────────────────────┘
                 │
                 ▼
   ┌──────────────────────────────┐
   │     GENERATE DISPLAY IMAGE    │── Op.5
   └──────────────────────────────┘
                 │
                 ▼
   ┌──────────────────────────────┐
   │      DISPLAY DISPLAY IMAGE    │── Op.6
   └──────────────────────────────┘
                 │
                 ▼
          ┌─────────────┐
          │     END     │
          └─────────────┘
```

# FIG. 21

3

CONTROL UNIT 31

COMMUNICATION UNIT 30

RECOGNITION UNIT 35

IMAGING UNIT 32

CALCULATION UNIT 36

STORAGE UNIT 33

GENERATION UNIT 37

DISPLAY UNIT 34

# FIG. 22

# FIG. 23

<u>3</u>

START

Op.11

ACQUIRE INPUT IMAGE

Op.12

REFERENCE OBJECT IS RECOGNIZED?

NO

YES  Op.13

CALCULATE POSITIONAL INFORMATION

Op.14

TRANSMIT INFORMATION PROVISION REQUES

Op.15

RECEIVE DISPLAY INFORMATION

Op.16

GENERATE DISPLAY IMAGE

Op.17

DISPLAY DISPLAY IMAGE

END

<u>4</u>

START

Op.21

RECEIVE INFORMATION PROVISION REQUEST

Op.22

SELECT DISPLAY INFORMATION

Op.23

TRANSMIT DISPLAY INFORMATION

END

# FIG. 24

EP 2 830 022 A2

# FIG. 25

AP ~504

503~ MW

OS ~502

HW ~501

# FIG. 26

EP 2 830 022 A2

**EP 2 830 022 A2**

## REFERENCES CITED IN THE DESCRIPTION

### Patent documents cited in the description

- JP 2010531089 A
- WO 2005119539 A
- JP 2012215989 A